# EUROPEAN PATENT APPLICATION

(11) **EP 4 366 016 A1**
(43) Date of publication of application: **08.05.2024**
(21) Application number: 22832739.1
(22) Date of filing: 07.06.2022
(51) Int. Cl.: H01M 10/052, H01M 4/13, H01M 4/36, H01M 4/587

(54) **NON-AQUEOUS ELECTROLYTE SECONDARY BATTERY**

(30) Priority: 28.06.2021 JP 2021106777
(71) Applicant: Panasonic Energy Co., Ltd., Osaka 570-8511 (JP)
(72) Inventor: SAKITANI Nobuhiro, Kadoma-shi, Osaka 571-0057 (JP)
(74) Representative: Novagraaf International SA
(86) International application number: PCT/JP2022/022964
(87) International publication number: WO 2023/276582

(57) **Abstract**

A non-aqueous electrolyte secondary battery (10) is characterized in that: an electrode body (14) in which a positive electrode (11) and a negative electrode (12) oppose each other through a separator (13), and a battery case (15) accommodating the electrode body (14), are provided; the negative electrode (12) has a negative electrode mixture layer containing first carbon particles and second carbon particles having a lower internal porosity than the first carbon particles; the non-aqueous electrolyte secondary battery (10) is used in a fixed state; and when the electrode body (14) in the fixed state is bisected into a top half region and a bottom half region with respect to the vertical direction, the second carbon particles are contained in greater number in the top half region than the bottom half region.

## Description

### TECHNICAL FIELD

The present disclosure relates to a non-aqueous electrolyte secondary battery.

### BACKGROUND

In recent years, as a secondary battery having a high output and a high energy density, a non-aqueous electrolyte secondary battery which includes a positive electrode, a negative electrode, and a non-aqueous electrolyte and performs charge and discharge by moving lithium ions and the like between the positive electrode and the negative electrode is widely used.

For example, Patent Literature 1 discloses a cylindrical battery in which a mixture layer on a positive electrode lead side (sealing assembly side) has a high interparticle porosity, Patent Literature 2 discloses a cylindrical battery in which a mixture layer on a negative electrode lead side (can bottom side) has a high interparticle porosity, Patent Literature 3 discloses a secondary battery in which an electrode density in both end region in a width direction of a negative electrode is higher than an electrode density in a central region in the width direction of the negative electrode, and Patent Literature 4 discloses a secondary battery in which an amount of pores per unit area of a positive electrode in a positive electrode mixture layer existing between adjacent positive electrode current collectors and negative electrode current collectors is larger in the central region than in the end region in a width direction of the positive electrode.

### CITATION LIST

### PATENT LITERATURE

Patent Literature 1: JP 2007-172881 A
Patent Literature 2: JP 2007-172878 A
Patent Literature 3: JP 2005-209411 A
Patent Literature 4: JP 2007-329077 A

### SUMMARY

### TECHNICAL PROBLEM

An object of the present disclosure is to provide a non-aqueous electrolyte secondary battery capable of improving charge-discharge cycle characteristics.

### SOLUTION TO PROBLEM

A non-aqueous electrolyte secondary battery according to an aspect of the present disclosure is a non-aqueous electrolyte secondary battery including: an electrode assembly in which a positive electrode and a negative electrode face each other with a separator interposed therebetween; and a battery case accommodating the electrode assembly, in which the negative electrode has a negative electrode mixture layer containing first carbon particles and second carbon particles having an internal porosity smaller than that of the first carbon particles, when the non-aqueous electrolyte secondary battery is used in a fixed state, and the electrode assembly in the fixed state is equally divided into an upper half region and a lower half region with respect to a vertical direction, the second carbon particles are contained more in the upper half region than in the lower half region.

In addition, a non-aqueous electrolyte secondary battery according to an aspect of the present disclosure is a non-aqueous electrolyte secondary battery including: an electrode assembly in which a positive electrode and a negative electrode face each other with a separator interposed therebetween; an exterior can having a bottomed cylindrical shape for accommodating the electrode assembly; and a sealing assembly for closing an opening of the exterior can, in which the negative electrode has a negative electrode mixture layer containing first carbon particles and second carbon particles having an internal porosity smaller than that of the first carbon particles, and when the electrode assembly is equally divided into a half region on a sealing assembly side and a half region on a bottom portion side of the exterior can with respect to an insertion direction into the exterior can, the second carbon particles are contained more in the half region on the sealing assembly side than in the half region on the bottom portion side of the exterior can.

In addition, a non-aqueous electrolyte secondary battery according to an aspect of the present disclosure is a non-aqueous electrolyte secondary battery including: an electrode assembly in which a positive electrode and a negative electrode face each other with a separator interposed therebetween; an exterior can having a bottomed cylindrical shape for accommodating the electrode assembly; and a sealing assembly for closing an opening of the exterior can, in which the negative electrode has a negative electrode mixture layer containing first carbon particles and second carbon particles having an internal porosity smaller than that of the first carbon particles, and when the electrode assembly is equally divided into a half region on a sealing assembly side and a half region on a bottom portion side of the exterior can with respect to an insertion direction into the exterior can, the second carbon particles are contained more in the half region on the bottom portion side of the exterior can than in the half region on the sealing assembly side.

### ADVANTAGEOUS EFFECTS OF INVENTION

According to one aspect of the present disclosure, charge-discharge cycle characteristics can be improved.

### BRIEF DESCRIPTION OF DRAWINGS

FIG. 1 is a cross-sectional view of a non-aqueous electrolyte secondary battery as an example of an embodiment.
FIG. 2 is a cross-sectional view illustrating an example of carbon particles used as a negative electrode active material.
FIG. 3 is a side view illustrating a state in which the non-aqueous electrolyte secondary battery illustrated in FIG. 1 is fixed.
FIG. 4 is a perspective view of a wound electrode assembly used in the non-aqueous electrolyte secondary battery of FIG. 3.
FIG. 5 is a side view illustrating another example of a state in which the non-aqueous electrolyte secondary battery illustrated in FIG. 1 is fixed.
FIG. 6 is a perspective view of a wound electrode assembly used in the non-aqueous electrolyte secondary battery of FIG. 5.

### DESCRIPTION OF EMBODIMENTS

An example of the embodiment will be described with reference to the drawings. A non-aqueous electrolyte secondary battery of the present disclosure is not limited to the embodiment described below. The drawings referred to in the description of the embodiment are schematically illustrated.

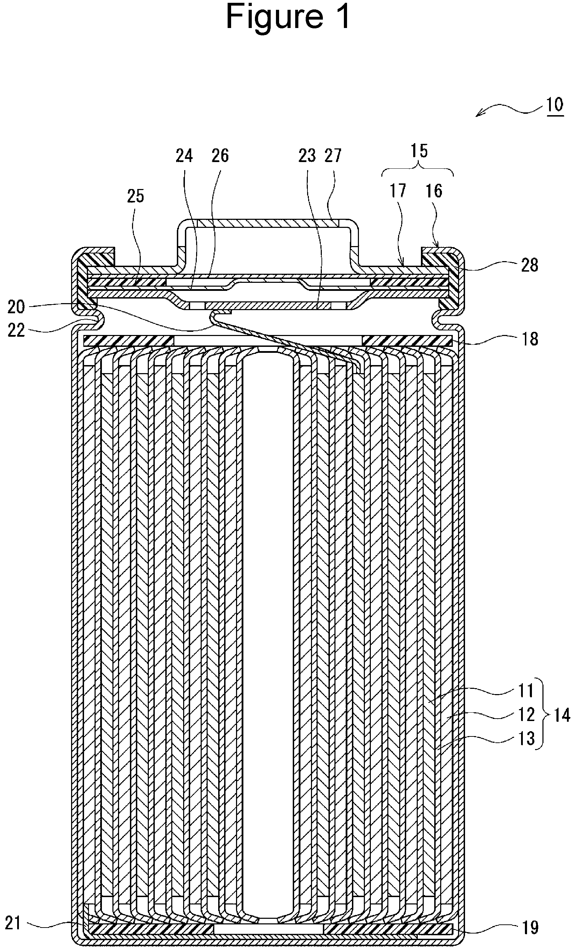

FIG. 1 is a cross-sectional view of a non-aqueous electrolyte secondary battery as an example of the embodiment. A non-aqueous electrolyte secondary battery 10 illustrated in FIG. 1 includes a wound electrode assembly 14 formed by winding a positive electrode 11 and a negative electrode 12 with a separator 13 interposed therebetween, a non-aqueous electrolytic solution, insulating plates 18 and 19 respectively disposed above and below the electrode assembly 14, and a battery case 15 that accommodates the above-described members. The battery case 15 includes an exterior can 16 and a sealing assembly 17 that closes an opening of the exterior can 16. Instead of the wound electrode assembly 14, another form of electrode assembly such as a stacked electrode assembly formed by alternately stacking positive electrodes and negative electrodes with a separator interposed therebetween may be applied. Examples of the battery case 15 include a bottomed cylindrical exterior can having a cylindrical shape, a rectangular shape, a coin shape, a button shape, or the like, and a pouch exterior package formed by laminating a resin sheet and a metal sheet.

The exterior can 16 is, for example, a bottomed cylindrical metal case. A gasket 28 is provided between the exterior can 16 and the sealing assembly 17 to ensure sealability of the inside of the battery. The exterior can 16 has, for example, a projecting portion 22 supporting the sealing assembly 17, and a part of a side face of the exterior can 16 projects inward to form the projecting portion 22. The projecting portion 22 is preferably formed in an annular shape along the circumferential direction of the exterior can 16, and supports the sealing assembly 17 on the upper face thereof.

The sealing assembly 17 has a structure in which a filter 23, a lower vent member 24, an insulating member 25, an upper vent member 26, and a cap 27 are stacked in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at the central portions of respective members, and the insulating member 25 is interposed between peripheral parts of respective members. When the internal pressure of the non-aqueous electrolyte secondary battery 10 increases due to heat generated by an internal short circuit or the like, the lower vent member 24 deforms so as to push up the upper vent member 26 toward the cap 27 and breaks, and a current path between the lower vent member 24 and the upper vent member 26 is cut off, for example. When the internal pressure further increases, the upper vent member 26 breaks, and the gas is discharged from an opening of the cap 27.

In the non-aqueous electrolyte secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom portion side of the exterior can 16 through the outside of the insulating plate 19. The positive electrode lead 20 is connected to a lower face of the filter 23 which is a bottom plate of the sealing assembly 17 by welding or the like, and the cap 27 which is a top plate of the sealing assembly 17 electrically connected to the filter 23 serves as a positive electrode terminal. The negative electrode lead 21 is connected to the inner face of the bottom of the exterior can 16 by welding or the like, and the exterior can 16 serves as a negative electrode terminal.

In the present embodiment, the sealing assembly 17 is the upper face of the battery case 15, the face of the exterior can 16 facing the sealing assembly 17 is the bottom face of the battery case 15, and the side face connecting the upper face and the bottom face is the side face of the battery case 15. A direction from the bottom face to the upper face of the battery case 15 is defined as a height direction of the non-aqueous electrolyte secondary battery 10.

Hereinafter, each component of the non-aqueous electrolyte secondary battery 10 will be described in detail.

### [Positive Electrode]

The positive electrode 11 includes a positive electrode current collector and a positive electrode mixture layer provided on the positive electrode current collector. A foil of a metal which is stable in the potential range of the positive electrode 11, such as aluminum, a film in which the metal is disposed on a surface layer thereof, or the like can be used for the positive electrode current collector. The positive electrode mixture layer contains a positive electrode active material, and optionally contains an additive such as a binder or a conductive agent.

The positive electrode 11 is produced, for example, by applying a positive electrode mixture slurry containing a positive electrode active material, a binder, a conductive agent, and the like onto the positive electrode current collector, drying the slurry to form the positive electrode mixture layer, and then rolling the positive electrode mixture layer with a rolling roller or the like.

Examples of the positive electrode active material include lithium-metal composite oxides containing transition metal elements such as Co, Mn, and Ni. Examples of the lithium-metal composite oxide include LiₓCoO₂, LiₓNiO₂, LiₓMnO₂, Li_{X}Co_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3). These may be independently used, or two or more thereof may be used in combination. The positive electrode active material preferably contains a lithium-nickel composite oxide such as LiₓNiO₂, LiₓCo_{y}Ni_{1-y}O₂, or LiₓNi_{1-y}M_{y}O_{z} (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3) from the viewpoint of achieving increase in the capacity of the non-aqueous electrolyte secondary battery.

As the binder, for example, fluorine-based resins such as polytetrafluoroethylene (PTFE) and polyvinylidene fluoride (PVDF), polyacrylonitrile (PAN), polyimide (PI), acrylic resins, polyolefin-based resins, styrene butadiene rubber (SBR), nitrile rubber

(NBR), carboxymethyl cellulose (CMC) or a salt thereof, polyacrylic acid (PAA) or a salt thereof, polyvinyl alcohol (PVA), and the like can be used. These may be independently used, or two or more thereof may be used in combination. The content of the binder in the positive electrode mixture layer is, for example, preferably 0.5 mass% to 10 mass%, and more preferably 1 mass% to 5 mass%.

Examples of the conductive agent include carbon particles such as carbon black (CB), acetylene black (AB), Ketjenblack, carbon nanotube (CNT), and graphite. These may be independently used, or two or more thereof may be used in combination.

### [Negative Electrode]

The negative electrode 12 includes a negative electrode current collector and a negative electrode mixture layer provided on the negative electrode current collector. For example, a foil of a metal which is stable within the potential range of the negative electrode, such as copper, a film in which the metal is disposed on a surface layer thereof, or the like is used for the negative electrode current collector. The negative electrode mixture layer contains a negative electrode active material, and optionally contains an additive such as a binder or a conductive agent.

Examples of the binder include fluorine-based resins such as polytetrafluoroethylene (PTFE) and polyvinylidene fluoride (PVDF), polyacrylonitrile (PAN), polyimide (PI), acrylic resins, polyolefin-based resins, styrene butadiene rubber (SBR), nitrile rubber (NBR), carboxymethyl cellulose (CMC) or a salt thereof, polyacrylic acid (PAA) or a salt thereof, polyvinyl alcohol (PVA), and the like. These may be independently used, or two or more thereof may be used in combination. The content of the binder in the negative electrode mixture layer is, for example, preferably 0.5 mass% to 10 mass%, and more preferably 1 mass% to 5 mass%.

Examples of the conductive agent include carbon particles such as carbon black (CB), acetylene black (AB), Ketjenblack, carbon nanotube (CNT), and graphite. These may be independently used, or two or more thereof may be used in combination.

In the present embodiment, the negative electrode active material contained in the negative electrode mixture layer contains a plurality of carbon particles having different internal porosities. Hereinafter, a specific description will be given with reference to the drawings.

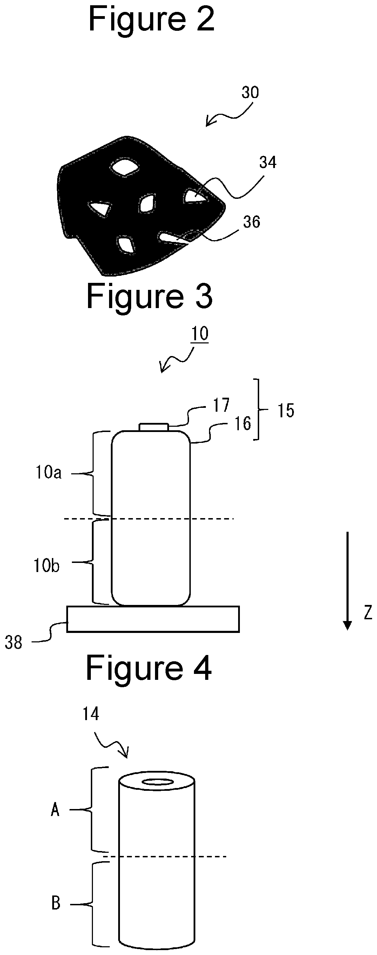

FIG. 2 is a cross-sectional view illustrating an example of carbon particles used as a negative electrode active material. As illustrated in FIG. 2, in a cross-sectional view of the carbon particle 30, the carbon particle 30 has a closed void 34 (hereinafter, the internal void 34) that is not connected from the inside of the particle to the particle surface, and a void 36 (hereinafter, the external void 36) that is connected from the inside of the particle to the particle surface.

The carbon particles 30 used as the negative electrode active material of the present embodiment include first carbon particles and second carbon particles having a lower internal porosity than the first carbon particles. Here, the internal porosity of the carbon particle is a two-dimensional value obtained from a ratio of an area of the internal voids 34 of the carbon particle to the cross-sectional area of the carbon particle. The internal porosity of the carbon particles is determined by the following procedure.

### <Method for Measuring Internal Porosity>

(1) The cross section of the carbon particles is exposed. Examples of the method of exposing the cross section include a method of cutting out a part of the negative electrode and exposing the cross section of the negative electrode mixture layer with an ion milling apparatus (for example, IM 4000 PLUS manufactured by Hitachi High-Tech Co., Ltd.).
   This cross section is a cross section perpendicular to the thickness direction of the negative electrode active material layer. Alternatively, carbon particles may be embedded in a resin, and a cross section of the resin block in which the carbon particles are embedded may be exposed by an ion milling apparatus (for example, IM 4000 PLUS manufactured by Hitachi High-Tech Co., Ltd.).
(2) A reflected electron image of a cross section of the exposed negative electrode active material layer is photographed using a scanning electron microscope. The magnification at the time of photographing the reflected electron image is 3000 times to 5000 times.
(3) The cross-sectional image obtained as described above is taken into a computer, and binarized using image analysis software (for example, ImageJ manufactured by National Institutes of Health, USA) to obtain a binarized image obtained by converting the particle cross section in the cross-sectional image into black and the voids present in the particle cross section into white.
(4) Carbon particles having a particle diameter of 5 µm to 50 µm are selected from the binarized image, and the area of the cross section of the carbon particles and the area of internal voids present in the cross section of the carbon particles are calculated. Here, the area of the cross section of the carbon particle refers to the area of a region surrounded by the outer periphery of the carbon particle, that is, the area of the entire cross section portion of the carbon particle. Regarding voids having a width of 3 µm or less among voids present in the cross section of the carbon particles, it may be difficult to determine whether the voids are internal voids or external voids in image analysis. Therefore, voids having a width of 3 µm or less may be regarded as internal voids. Then, from the calculated area of the cross section of the carbon particle and the area of the internal voids of the cross section of the carbon particle, the internal porosity of the carbon particle (the area of the internal voids of the cross section of the carbon particle × 100/the area of the cross section of the carbon particle) is calculated. The internal porosity of the carbon particles is an average value of 10 carbon particles.

The internal porosity of the first carbon particles is, for example, preferably greater than or equal to 8% and less than or equal to 20%, more preferably greater than or equal to 10% and less than or equal to 18%, and still more preferably greater than or equal to 12% and less than or equal to 16% from the viewpoint of improving the charge-discharge cycle characteristics. Further, the internal porosity of the second carbon particles only needs to be smaller than the internal porosity of the first carbon particles, but is preferably less than or equal to 5%, more preferably greater than or equal to 1% and less than or equal to 5%, and still more preferably greater than or equal to 3% and less than or equal to 5% from the viewpoint of improving the charge-discharge cycle characteristics.

The first carbon particle and the second carbon particle are produced, for example, as follows.

### <First Carbon Particles Having Internal Porosity of 8% to 20%>

For example, coke (precursor) as a main raw material is pulverized into a predetermined size, and the pulverized coke is aggregated with a binder, and then the coke is fired at a temperature of 2600°C or higher to be graphitized in a state of being further pressure-molded into a block shape. The block-shaped molded assembly after graphitization is pulverized and sieved to obtain carbon particles having a desired size. Here, the internal porosity can be adjusted to 8% to 20% by the amount of a volatile component added to the block-shaped molded assembly. When a part of the binder added to the coke (precursor) volatilizes during firing, the binder can be used as the volatile component. As such a binder, pitch is exemplified.

### <Second Carbon Particles Having Internal Porosity of 5% or Less>

For example, coke (precursor) as a main raw material is pulverized into a predetermined size, and fired at a temperature of 2600°C or higher to be graphitized in a state where the pulverized coke is aggregated with a binder, and then sieved to obtain carbon particles having a desired size. Here, the internal porosity can be adjusted to 5% or less depending on the particle diameter of the precursor after pulverization, the particle diameter of the precursor in an aggregated state, and the like. For example, the average particle diameter (median diameter D50) of the pulverized precursor is preferably in the range of 12 µm to 20 µm. When the internal porosity is reduced to 5% or less, it is preferable to increase the particle diameter of the precursor after pulverization.

The first carbon particles and the second carbon particles used in the present embodiment are preferably graphite such as natural graphite and artificial graphite, but may be a carbon material other than graphite. In the case of graphite, artificial graphite is preferable from the viewpoint of ease of adjustment of the internal porosity and the like. The interplanar spacing (d₀₀₂) between (002) planes of the first carbon particle and the second carbon particle used in the present embodiment as measured by a wide angle X-ray diffraction method is, for example, preferably greater than or equal to 0.3354 nm, more preferably greater than or equal to 0.3357 nm, and preferably less than 0.340 nm, more preferably less than or equal to 0.338 nm. The crystallite sizes (Lc(002)) of the first carbon particle and the second carbon particle used in the present embodiment determined by an X-ray diffraction method are, for example, preferably greater than or equal to 5 nm, more preferably greater than or equal to 10 nm, and preferably less than or equal to 300 nm, more preferably less than or equal to 200 nm. When the interplanar spacing (d₀₀₂) and the crystallite size (Lc(002)) satisfy the above ranges, the battery capacity of the non-aqueous electrolyte secondary battery tends to be larger than when the above ranges are not satisfied.

In addition to the carbon particles, the negative electrode active material may contain a material capable of reversibly occluding and releasing lithium ions, for example, a metal to be alloyed with lithium such as silicon (Si) or tin (Sn), an alloy containing a metal element such as Si or Sn, a composite oxide, or the like.

FIG. 3 is a side view illustrating a state in which the non-aqueous electrolyte secondary battery illustrated in FIG. 1 is fixed. The non-aqueous electrolyte secondary battery of the present embodiment is desirably used as an installed type or stationary power source installed indoors or outdoors, or a power source installed in a movable object such as an electric vehicle. As illustrated in FIG. 3, the non-aqueous electrolyte secondary battery 10 used as such a power source is installed and used in a fixed state on a fixing portion 38 such as a mounting table, a case, or the like. The phrase "used in a fixed state" means that the orientation of the non-aqueous electrolyte secondary battery 10 is not significantly changed after the non-aqueous electrolyte secondary battery 10 is installed in the fixing portion 38 and started to be used. For example, a non-aqueous electrolyte secondary battery used as a power source of a mobile phone is not included in the case of being used in a fixed state because it is placed in any orientation with use of the mobile phone.

In FIG. 3, an arrow Z indicates the vertical direction (gravity direction). That is, the non-aqueous electrolyte secondary battery 10 illustrated in FIG. 3 is provided to stand along the vertical direction. More specifically, the non-aqueous electrolyte secondary battery 10 illustrated in FIG. 3 is installed such that the bottom of the battery case 15 is in contact with the fixing portion 38, and the height direction of the non-aqueous electrolyte secondary battery 10 is along the vertical direction.

FIG. 4 is a perspective view of a wound electrode assembly used in the non-aqueous electrolyte secondary battery of FIG. 3. Here, a region A of the electrode assembly 14 illustrated in FIG. 4 is a region corresponding to an upper half region 10a when the electrode assembly 14 accommodated in the non-aqueous electrolyte secondary battery 10 illustrated in FIG. 3 is divided into two equal parts in the vertical direction. A region B of the electrode assembly 14 illustrated in FIG. 4 is a region corresponding to a lower half region 10b when the electrode assembly 14 accommodated in the non-aqueous electrolyte secondary battery 10 illustrated in FIG. 3 is divided into two equal parts in the vertical direction.

In the present embodiment, the second carbon particles contained in the negative electrode mixture layer are contained more in the region A (that is, the upper half region 10a illustrated in FIG. 3) shown in FIG. 4 than in the region B (that is, the lower half region 10billustrated in FIG. 3) shown in FIG. 4. Since the height direction of the non-aqueous electrolyte secondary battery 10 illustrated in FIG. 3 is along the vertical direction, the vertical direction can be rephrased as the height direction of the non-aqueous electrolyte secondary battery 10. That is, when the electrode assembly 14 is equally divided into the upper half region and the lower half region with respect to the height direction of the non-aqueous electrolyte secondary battery 10, the second carbon particles contained in the negative electrode mixture layer are contained more in the upper half region than in the lower half region.

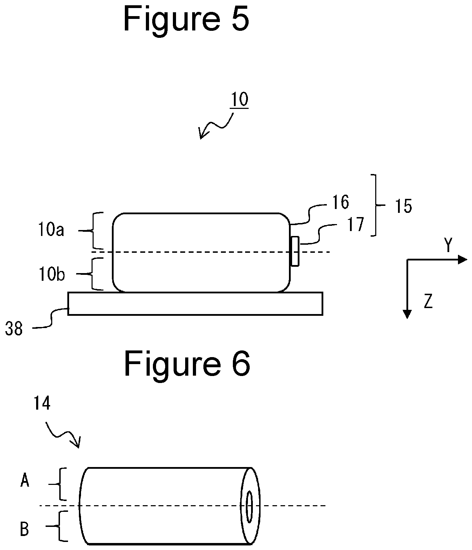

FIG. 5 is a side view illustrating another example of a state in which the non-aqueous electrolyte secondary battery illustrated in FIG. 1 is fixed. In FIG. 5, an arrow Z indicates the vertical direction (gravity direction), and an arrow Y indicates the direction (horizontal direction) orthogonal to the vertical direction. The non-aqueous electrolyte secondary battery 10 illustrated in FIG. 5 is installed such that the side face of the battery case 15 is in contact with the fixing portion 38, and the height direction of the non-aqueous electrolyte secondary battery 10 is along the direction (horizontal direction) orthogonal to the vertical direction.

FIG. 6 is a perspective view of a wound electrode assembly used in the non-aqueous electrolyte secondary battery of FIG. 5. Here, a region A of the electrode assembly 14 illustrated in FIG. 6 is a region corresponding to an upper half region 10a when the electrode assembly 14 accommodated in the non-aqueous electrolyte secondary battery 10 illustrated in FIG. 5 is equally divided with respect to the vertical direction. A region B of the electrode assembly 14 illustrated in FIG. 6 is a region corresponding to a lower half region 10b when the electrode assembly 14 accommodated in the non-aqueous electrolyte secondary battery 10 illustrated in FIG. 5 is equally divided with respect to the vertical direction.

In the present embodiment, the second carbon particles contained in the negative electrode mixture layer are contained more in the region A (that is, the upper half region 10a illustrated in FIG. 5) shown in FIG. 6 than in the region B (that is, the lower half region 10b illustrated in FIG. 5) shown in FIG. 6.

In the non-aqueous electrolyte secondary battery 10 used in a fixed state, the non-aqueous electrolytic solution in the battery case 15 is unevenly distributed in the lower part in the vertical direction by gravity, and the non-aqueous electrolytic solution is easily depleted in the upper part in the vertical direction. When the non-aqueous electrolytic solution is unevenly distributed as described above, charge-discharge cycle characteristics are deteriorated. Meanwhile, since carbon particles having a small internal porosity are hard and difficult to be crushed, a large number of relatively large voids are likely to be formed between carbon particles in the negative electrode mixture layer when the negative electrode 12 is manufactured. Therefore, as in the non-aqueous electrolyte secondary battery 10 of the present embodiment, by disposing more second carbon particles having an internal porosity smaller than that of the first carbon particles in the upper half region 10a than in the lower half region 10b, the non-aqueous electrolytic solution is retained in relatively large inter-particle voids formed in the negative electrode mixture layer in a large number in the upper half region 10a, so that retention of the non-aqueous electrolytic solution on the upper side in the vertical direction is improved. As a result, the non-aqueous electrolytic solution is suppressed from being unevenly distributed in the lower part in the vertical direction, and the charge-discharge cycle characteristics can be improved accordingly. In the above description, a non-aqueous electrolyte secondary battery including a bottomed cylindrical battery case having a cylindrical shape and a wound electrode assembly has been described as an example. However, the same effect can be obtained even in the case of a non-aqueous electrolyte secondary battery including a bottomed cylindrical battery case having a rectangular shape, a stacked electrode assembly, or the like.

Further, in the present embodiment, it is preferable that the first carbon particles having a larger internal porosity than the second carbon particles are disposed more in the lower half region 10b than in the upper half region 10a. Since the carbon particles having a large internal porosity are soft and easily crushed, voids between the carbon particles in the negative electrode mixture layer are reduced when the negative electrode 12 is manufactured, and relatively large voids are reduced. Therefore, by disposing more first carbon particles having a larger internal porosity than the second carbon particles in the lower half region 10b than in the upper half region 10a, the non-aqueous electrolytic solution is less likely to be excessively retained in the negative electrode mixture layer in the lower half region 10b. As a result, the non-aqueous electrolytic solution is further suppressed from being unevenly distributed in the lower part in the vertical direction, and the charge-discharge cycle characteristics can be further improved accordingly.

In the present embodiment, the second carbon particles may be contained more in the upper half region 10a than in the lower half region 10b, but for example, from the viewpoint of further improving the charge-discharge cycle characteristics, the ratio of the second carbon particles contained in the upper half region 10a to the second carbon particles contained in the lower half region 10b is preferably from 60:40 to 100:0 in mass ratio. In addition, from the viewpoint of further improving the charge-discharge cycle characteristics, the ratio of the first carbon particles and the second carbon particles in the upper half region 10a is preferably 70:30 to 0: 100 in mass ratio. In addition, from the viewpoint of further improving the charge-discharge cycle characteristics, the ratio of the first carbon particles and the second carbon particles in the lower half region 10b is preferably 80:20 to 100:0 in mass ratio.

The non-aqueous electrolyte secondary battery 10 illustrated in FIG. 3 is fixed such that the bottom of the exterior can 16 is in contact with the fixing portion 38. In this case, when the electrode assembly 14 is equally divided into a half region on the sealing assembly 17 side and a half region on the bottom portion side of the exterior can 16 with respect to the insertion direction into the exterior can 16, the second carbon particles having an internal porosity smaller than that of the first carbon particles are contained more in the half region on the sealing assembly 17 side than in the half region on the bottom portion side of the exterior can 16. In this case, the first carbon particles having a larger internal porosity than the second carbon particles are preferably contained more in the half region on the bottom portion side of the exterior can 16 than in the half region of the sealing assembly 17 side. Further, when the battery case 15 includes the bottomed cylindrical exterior can 16 and the sealing assembly 17, the non-aqueous electrolyte secondary battery 10 can be fixed such that the sealing assembly 17 is in contact with the fixing portion 38 instead of the bottom of the exterior can 16. In this case, when the electrode assembly 14 is equally divided into the half region on the sealing assembly 17 side and the half region on the bottom portion side of the exterior can 16 with respect to the insertion direction into the exterior can 16, the second carbon particles having an internal porosity smaller than that of the first carbon particles are contained more in the half region on the bottom portion side of the exterior can 16 than in the half region on the sealing assembly 17 side. In this case, the first carbon particles having a larger internal porosity than the second carbon particles are preferably contained more in the half region of the sealing assembly 17 side than in the half region on the bottom portion side of the exterior can 16. This improves the charge-discharge cycle characteristics of the non-aqueous electrolyte secondary battery 10. The internal porosity, the content ratio, and the like of each carbon particle may be the same as described above.

An example of a method for producing the negative electrode 12 will be described. For example, first, a negative electrode active material containing first carbon particles (second carbon particles as necessary) and a binder are mixed together with a solvent to prepare a slurry B for the lower half region 10b. In addition, the negative electrode active material containing the second carbon particles (the first carbon particles as necessary) and the binder are mixed together with a solvent to prepare a slurry A for the upper half region 10a. For example, in the case of the non-aqueous electrolyte secondary battery used in the state illustrated in FIG. 3, the slurries A and B are applied so as to be along the longitudinal direction of the negative electrode current collector, and be adjacent to each other in the width direction orthogonal to the longitudinal direction. In the case of the non-aqueous electrolyte secondary battery used in the state illustrated in FIG. 5, the slurries A and B are alternately applied in a predetermined length along the longitudinal direction of the negative electrode current collector. The applied slurry is then dried, and the coated film (negative electrode mixture layer) is rolled to form a negative electrode according to the present embodiment. By using the electrode formed in this way, when the electrode assembly is divided into two equal parts with respect to the vertical direction in a state where the non-aqueous electrolyte secondary battery is fixed, more second carbon particles can be disposed in the upper half region than in the lower half region. Alternatively, when the electrode assembly is equally divided into two in the insertion direction into the exterior can, the second carbon particles can be disposed more in the half region on the sealing assembly side than in the half region on the bottom portion side of the exterior can, or can be disposed more in the half region on the bottom side portion of the exterior can than in the half region on the sealing assembly side.

### [Separator]

A porous sheet having ion permeability and insulation properties is used as the separator 13, for example. Specific examples of the porous sheet include a fine porous thin film, a woven fabric, and a nonwoven fabric. As material of the separator, olefin-based resin such as polyethylene or polypropylene, cellulose, or the like is suitable. The separator 13 may be a stack having a cellulose fiber layer and a fiber layer of thermoplastic resin such as olefin-based resin. In addition, the separator 13 may be a multilayer separator having a polyethylene layer and a polypropylene layer, and a separator having a surface coated with a material such as aramid-based resin or ceramic may be used.

### [Non-Aqueous Electrolytic Solution]

The non-aqueous electrolytic solution contains a non-aqueous solvent and an electrolyte salt dissolved in the non-aqueous solvent. Examples of the non-aqueous solvent that can be used include esters, ethers, nitriles such as acetonitrile, amides such as dimethylformamide, and mixed solvents of two or more types thereof. The non-aqueous solvent may contain a halogen-substituted product in which at least a part of hydrogen in these solvents is substituted with a halogen atom such as fluorine.

Examples of the esters include cyclic carbonic acid esters such as ethylene carbonate (EC), propylene carbonate (PC), and butylene carbonate; chain carbonic acid esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone and γ-valerolactone; and chain carboxylic acid esters such as methyl acetate, ethyl acetate, propyl acetate, methyl propionate (MP), and ethyl propionate.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-di ethoxy ethane, triethylene glycol dimethyl ether, and tetraethylene glycol dimethyl ether.

As the halogen-substituted product, it is preferable to use a fluorinated cyclic carbonic acid ester such as fluoroethylene carbonate (FEC), a fluorinated chain carbonic acid ester, a fluorinated chain carboxylic acid ester such as methyl fluoropropionate (FMP), or the like.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ(1 < x < 6, n is 1 or 2), LiB₁₀Cl₁₀, LiCl, LiBr, LiI, chloroborane lithium, lower aliphatic lithium carboxylate, borates such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) {l and m are each an integer of 1 or more}. These lithium salts may be independently used, or two or more thereof may be used in combination. Among them, LiPF₆ is preferably used from the viewpoint of ion conductivity, electrochemical stability, and the like. The concentration of the lithium salt is preferably 0.8 to 1.8 mol per 1 L of the solvent.

### EXAMPLES

Hereinafter, the present disclosure will be further described with reference to examples, but the present disclosure is not limited to these examples.

### <Example 1>

### [Production of Positive Electrode]

95 parts by mass of LiNi_{0.8}Co_{0.15}Al_{0.05}O₂, 2.5 parts by mass of acetylene black (AB), and 2.5 parts by mass of polyvinylidene fluoride (PVDF) having an average molecular weight of 1.1 million were mixed, and an appropriate amount of N-methyl-2-pyrrolidone (NMP) was added to prepare a positive electrode mixture slurry having a solid content of 70 mass%. Next, the positive electrode mixture slurry was applied to both surfaces of a strip-shaped positive electrode current collector made of an aluminum foil having a thickness of 15 µm, and the coating film was heated to 100°C to 150°C and dried. The dried coating film was compressed using a roller and then cut into a predetermined plate size to prepare a positive electrode in which a positive electrode mixture layer was formed on both surfaces of the positive electrode current collector. A positive electrode exposed portion where the positive electrode mixture layer did not exist and the surface of the positive electrode current collector was exposed was provided at a substantially central portion in the longitudinal direction of the positive electrode, and an aluminum positive electrode lead was welded to the positive electrode exposed portion.

### [Production of Carbon Particles A]

Coke was pulverized until the average particle diameter (median diameter D50) reached 15 µm. Pitch as a binder was added to the pulverized coke, and the coke was aggregated until the average particle diameter (median diameter D50) reached 17 µm. This aggregate was fired at a temperature of 2800°C to be graphitized, and then sieved using a 250 mesh sieve to obtain carbon particles A having an average particle diameter (median diameter D50) of 23 µm and an internal porosity of 1%.

### [Production of Carbon Particles B]

Coke was pulverized until the average particle diameter (median diameter D50) reached 15 µm, pitch as a binder was added to the pulverized coke to agglomerate, and then a block-shaped molded assembly having a density of 1.6 g/cm³ to 1.9 g/cm³ was produced at an isotropic pressure. The block-shaped molded assembly was fired at a temperature of 2800°C to be graphitized. Next, the graphitized block-shaped molded assembly was pulverized, and sieved using a 250 mesh sieve to obtain carbon particles B having an average particle diameter (median diameter D50) of 23 µm and an internal porosity of 8%.

### [Production of Negative Electrode]

100 parts by mass of the carbon particles A, 1 part by mass of carboxymethyl cellulose (CMC), 1 part by mass of styrene butadiene rubber (SBR), and an appropriate amount of water were mixed to prepare a first negative electrode mixture slurry. Further, 100 parts by mass of the carbon particles B, 1 part by mass of carboxymethyl cellulose (CMC), 1 part by mass of styrene butadiene rubber (SBR), and an appropriate amount of water were mixed to prepare a second negative electrode mixture slurry.

The first negative electrode mixture slurry and the second negative electrode mixture slurry were applied in a stripe shape to both surfaces of a strip-shaped negative electrode current collector made of a copper foil so as to be adjacent to each other along the longitudinal direction of the copper foil and in the width direction orthogonal to the longitudinal direction. Thereafter, the coating film was dried, and the dried coating film was compressed using a roller, and then cut into a predetermined plate size to prepare a negative electrode in which a negative electrode mixture layer was formed on the both surfaces of the negative electrode current collector. A negative electrode exposed portion where the negative electrode mixture layer did not exist and the surface of the negative electrode current collector was exposed was provided at the starting end portion, and a negative electrode lead made of nickel/copper was welded to the negative electrode exposed portion.

### [Preparation of Non-Aqueous Electrolytic Solution]

LiPF₆ was dissolved in a mixed solvent of ethylene carbonate (EC), dimethyl carbonate (DMC), and diethyl carbonate (DEC) to prepare a non-aqueous electrolytic solution.

### [Production of Non-Aqueous Electrolyte Secondary Battery]

(1) A wound electrode assembly was produced by winding between the positive electrode and the negative electrode with the separator made of polyethylene having a thickness of 20 µm interposed therebetween.
(2) The electrode assembly was inserted into an exterior can, the negative electrode lead was welded to the bottom of the exterior can, and the positive electrode lead was welded to a sealing assembly. The electrode assembly was inserted into the exterior can such that, when the electrode assembly was divided into two equal parts in the height direction of the non-aqueous electrolyte secondary battery, the negative electrode mixture layer disposed in the upper half region was derived from the first negative electrode mixture slurry, and the negative electrode mixture layer disposed in the lower half region was derived from the second negative electrode mixture slurry.
(3) The non-aqueous electrolytic solution was injected into the exterior can, and then the opening end of the exterior can was crimped to the sealing assembly with a gasket interposed therebetween. This was used as a non-aqueous electrolyte secondary battery.

### <Example 2>

### [Production of Carbon Particles C]

Carbon particles C were obtained in the same manner as the carbon particles A except that the addition amount of pitch was increased to set the internal porosity to 5%.

A non-aqueous electrolyte secondary battery was produced in the same manner as in Example 1 except that the carbon material C was used as the carbon material used in the first negative electrode mixture slurry.

### <Example 3>

### [Production of Carbon Particles D]

Carbon particles D were obtained in the same manner as the carbon particles B except that the addition amount of pitch was increased to set the internal porosity to 15%.

A non-aqueous electrolyte secondary battery was produced in the same manner as in Example 1 except that the carbon material C was used as the carbon material used in the first negative electrode mixture slurry and the carbon material D was used as the carbon material used in the second negative electrode mixture slurry.

### <Example 4>

### [Production of Carbon Particles E]

Carbon particles E were obtained in the same manner as the carbon particles B except that the addition amount of pitch was increased to set the internal porosity to 20%.

A non-aqueous electrolyte secondary battery was produced in the same manner as in Example 1 except that the carbon material C was used as the carbon material used in the first negative electrode mixture slurry and the carbon material E was used as the carbon material used in the second negative electrode mixture slurry.

### <Comparative Example 1>

A non-aqueous electrolyte secondary battery was produced in the same manner as in Example 1 except that the carbon material B was used as the carbon material used in the first negative electrode mixture slurry and the carbon material A was used as the carbon material used in the second negative electrode mixture slurry.

### <Comparative Example 2>

A non-aqueous electrolyte secondary battery was produced in the same manner as in Example 1 except that a negative electrode mixture layer was formed using only the first negative electrode mixture slurry of Example 2.

### <Comparative Example 3>

A non-aqueous electrolyte secondary battery was produced in the same manner as in Example 1 except that a negative electrode mixture layer was formed using only the second negative electrode mixture slurry of Example 1.

### <Comparative Example 4>

A non-aqueous electrolyte secondary battery was produced in the same manner as in Comparative Example 2 except that a mixture of the carbon material B and the carbon material C (mass ratio 1: 1) was used instead of the carbon material C.

### [Evaluation of Charge-Discharge Cycle Characteristics]

The non-aqueous electrolyte secondary batteries of Examples 1 to 4 and Comparative Examples 1 to 4 were each installed on the mounting table such that the bottom of the non-aqueous electrolyte secondary battery was brought into contact with the mounting table, and the height direction of the battery was along the vertical direction. Then, each of the non-aqueous electrolyte secondary batteries was charged at a constant current of 0.7 It under a temperature environment of 25°C until the voltage reached 4.2 V, and then charged at a constant voltage of 4.2 V until the current reached 0.05 It. The battery was then discharged at a constant current of 0.7 It until the voltage reached 2.5 V This charge-discharge cycle was defined as 1 cycle, 1,000 cycles were performed, and the capacity retention rate was obtained by the following formula. Capacity retention rate (%) = (discharge capacity at 1,000th cycle/discharge capacity at 1st cycle) × 100

Table 1 summarizes the results of the charge-discharge cycle characteristics of Examples 1 to 4 and Comparative Examples 1 to 4.

**[Table 1]**

| | carbon particle (Internal Porosity) | | capacity retention rate |
|---|---|---|---|
| | upper half region | lower half region | |
| Example 1 | carbon particle A (1%) | carbon particle B (8%) | 82% |
| Example 2 | carbon particle C (5%) | carbon particle B (8%) | 80% |
| Example 3 | carbon particle C (5%) | carbon particle D (15%) | 82% |
| Example 4 | carbon particle C (5%) | carbon particle E (20%) | 83% |
| Comparative Example 1 | carbon particle B (8%) | carbon particle A (1%) | 62% |
| Comparative Example 2 | carbon particle C (5%) | | 68% |
| Comparative Example 3 | carbon particle B (8%) | | 73% |
| Comparative Example 4 | carbon particle B + carbon particle C (8% + 5%) | | 71% |

In all of Examples 1 to 4, the capacity retention rates in the charge-discharge cycles were higher than those in Comparative Examples 1 to 4. Therefore, as in Examples 1 to 4, when the non-aqueous electrolyte secondary battery is used in a fixed state, and the electrode assembly in the fixed state is equally divided into the upper half region and the lower half region with respect to the vertical direction, the charge-discharge cycle characteristics can be improved by arranging more carbon particles having a small internal porosity in the upper half region than in the lower half region.

### REFERENCE SIGNS LIST

- 10: Non-aqueous electrolyte secondary battery
- 10a: upper half region
- 10b: lower half region
- 11: positive electrode
- 12: negative electrode
- 13: separator
- 14: electrode assembly
- 15: battery case
- 16: exterior can
- 17: sealing assembly
- 18, 19: insulating plate
- 20: positive electrode lead
- 21: negative electrode lead
- 22: projecting portion
- 23: filter
- 24: lower vent member
- 25: insulating member
- 26: upper vent member
- 27: cap
- 28: gasket
- 38: fixing portion

## Claims

1. A non-aqueous electrolyte secondary battery comprising an electrode assembly in which a positive electrode and a negative electrode face each other with a separator interposed therebetween, and a battery case accommodating the electrode assembly, wherein
the negative electrode has a negative electrode mixture layer containing first carbon particles and second carbon particles having an internal porosity smaller than that of the first carbon particles, and
when the non-aqueous electrolyte secondary battery is used in a fixed state, and the electrode assembly in the fixed state is equally divided into an upper half region and a lower half region with respect to a vertical direction, the second carbon particles are contained more in the upper half region than the lower half region.

2. The non-aqueous electrolyte secondary battery according to claim 1, wherein the first carbon particles are contained more in the lower half region than in the upper half region.

3. The non-aqueous electrolyte secondary battery according to claim 1 or 2, wherein the first carbon particles have the internal porosity of greater than or equal to 8% and less than or equal to 20%, and the second carbon particles have the internal porosity of less than or equal to 5%.

4. A non-aqueous electrolyte secondary battery comprising: an electrode assembly in which a positive electrode and a negative electrode face each other with a separator interposed therebetween; an exterior can having a bottomed cylindrical shape for accommodating the electrode assembly; and a sealing assembly for closing an opening of the exterior can, wherein
the negative electrode has a negative electrode mixture layer containing first carbon particles and second carbon particles having an internal porosity smaller than that of the first carbon particles, and
when the electrode assembly is equally divided into a half region on a sealing assembly side and a half region on a bottom portion side of the exterior can with respect to an insertion direction into the exterior can, the second carbon particles are contained more in the half region on the sealing assembly side than in the half region on the bottom portion side of the exterior can.

5. The non-aqueous electrolyte secondary battery according to claim 4, wherein the first carbon particles are contained more in the half region on the bottom portion side of the exterior can than in the half region on the sealing assembly side.

6. The non-aqueous electrolyte secondary battery according to claim 4 or 5, wherein the first carbon particles have the internal porosity of greater than or equal to 8% and less than or equal to 20%, and the second carbon particles have the internal porosity of less than or equal to 5%.

7. A non-aqueous electrolyte secondary battery comprising: an electrode assembly in which a positive electrode and a negative electrode face each other with a separator interposed therebetween; an exterior can having a bottomed cylindrical shape for accommodating the electrode assembly; and a sealing assembly for closing an opening of the exterior can, wherein
the negative electrode has a negative electrode mixture layer containing first carbon particles and second carbon particles having an internal porosity smaller than that of the first carbon particles, and
when the electrode assembly is equally divided into a half region on a sealing assembly side and a half region on a bottom portion side of the exterior can with respect to an insertion direction into the exterior can, the second carbon particles are contained more in the half region on the bottom portion side of the exterior can than in the half region on the sealing assembly side.

8. The non-aqueous electrolyte secondary battery according to claim 7, wherein the first carbon particles are contained more in the half region on the sealing assembly side than in the half region on the bottom portion side of the exterior can.

9. The non-aqueous electrolyte secondary battery according to claim 7 or 8, wherein the first carbon particles have the internal porosity of greater than or equal to 8% and less than or equal to 20%, and the second carbon particles have the internal porosity of less than or equal to 5%.
